# EUROPÄISCHE PATENTSCHRIFT

(11) **EP 0 349 868 B1**
(45) Veröffentlichungstag und Bekanntmachung des Hinweises auf die Patenterteilung: **20.01.1993**
(21) Anmeldenummer: 89111559.4
(22) Anmeldetag: 24.06.1989
(51) Int. Cl.: H01M 10/10, H01M 2/18

(54) **Bleiakkumulator mit einem gelartig festgelegten Schwefelsäure-Elektrolyten**
Lead storage battery with gel like immobilised electrolyte comprising sulfuric acid
Accumulateur au plomb comprenant comme électrolyte un gel immobilisé à bade d'acide sulfurique

(30) Priorität: 04.07.1988 DE 3822538
(43) Veröffentlichungstag der Anmeldung: 10.01.1990
(73) Patentinhaber: VARTA Batterie Aktiengesellschaft, D-30405 Hannover (DE)
(72) Erfinder: Rabenstein, Heinrich, D-6230 Frankfurt am Main 80 (DE); Kliegel, Nicola, D-6093 Flörsheim (DE)
(74) Vertreter: Kaiser, Dieter Ralf, Dipl.-Ing.

(56) Entgegenhaltungen:
- DE-B- 1 054 131
- DE-B- 1 194 015
- DE-B- 1 269 212

## Beschreibung

Die Erfindung betrifft einen Bleiakkumulator mit einem gelartig festgelegten Schwefelsäure-Elektrolyten und einer benachbarte Elektrodenplatten entgegengesetzter Polarität auf Abstand haltenden Separation.

Bleiakkumulatoren mit festgelegtem Elektrolyten, sei es mit Hilfe eines Gelifizierungsmittels oder durch Aufsaugen der Schwefelsäure in einem Vlies, besitzen Vorteile auf verschiedenen Anwendungsgebieten, insbesondere dem der Elektrotraktion. Die Vorteile liegen einmal in der Lageunabhängigkeit während des Betriebes bzw. einer erhöhten Auslaufsicherheit, zum anderen aber auch in einem geringeren Wartungsaufwand.

Die Wartung wird u.a. dadurch erleichtert, daß die immobilisierte Schwefelsäure weniger zur Ausbildung eines vertikalen Konzentrationsgefälles neigt, als dies bei Bleibatterien mit beweglichem Elektrolyten der Fall ist. Wegen des Fehlens einer Elektrolytkonvektion bleibt nämlich die unerwünschte Säureschichtung aus, so daß sich beim Laden eine gleichmäßigere Stromverteilung in den Zellen einstellt. Diese macht es möglich, daß Volladungen mit einem günstigeren Ladefaktor durchgeführt werden können.

An die Separation in einem Bleiakkumulator mit festgelegtem Elektrolyten werden viel weitergehende Ansprüche gestellt als daß sie lediglich die entgegengesetzten Plattenpolaritäten zuverlässig voneinander elektrisch isoliert und den Innenwiderstand der Zelle möglichst klein hält. In Zellen mit Flüssigelektrolyt eingesetzte Separatoren, die nur dieses leisten, lassen sich beispielsweise der US-PS 2 066 939 entnehmen. Ein danach bekannter Separator ist mit Abstandshaltern in Form von Rippen versehen und durchgehend porös, wobei zwischen Rippen und Separator-Grundblatt trotz Identität des Materials Unterschiede im Porositätsgrad bestehen können.

Ein anderer, ebenfalls nur für Flüssigelektrolyt-Zellen bestimmter Separator gemäß DE-OS 26 27 143 hat scheibenförmige Gestalt und besitzt auf beiden Seiten erhabene Partien von beispielsweise kreisförmigem oder polygonalem Umriß, durch welche ein gleichförmiges Strömungsmuster im gesamten Elektrolytraum unter gleichzeitiger Erfüllung der Stützfunktion erzeugt werden soll.

Derartige Separatoren sind den Erfordernissen in Bleiakkumulatoren mit gelifizierter Säure nicht gewachsen. Man verwendet dort vielmehr in der Regel Glasmatten oder Glasvliese, beispielsweise in einer in der US-PS 3 711 332 beschriebenen Anordnung. Aus der DE-PS 1 194 015 ist ein anderer Bleiakkumulator mit verdicktem Elektrolyten bekannt, dessen Elektroden ebenfalls mit Vliesen oder Geweben umhüllt sind, jedoch zusätzlich mittels gewellten Blechen auf Abstand gehalten werden. Diese Maßnahme soll mit Blick auf Alterungserscheinungen in der vom Vlies aufgesaugten Elektrolytschicht verhindern, daß sich diese Schicht von den Elektroden ablöst und dadurch der Übergangswiderstand wächst.

Ein naturbedingter Nachteil von Bleibatterien mit festgelegtem Elektrolyten ist deren verminderte Kapazitätsleistung, einerseits begründet durch schleppenden Ausgleich der Säurekonzentration bei Stromentnahme wegen der stark gebremsten Diffusionsgeschwindigkeit im Gel, andererseits verursacht durch Gasblasen, die bereits während der Elektrolytbefüllung, u.a. durch Freisetzen von CO₂ aus den nach der Formation gewässerten und getrockneten Elektroden entstehen und an den Plattenoberflächen haften bleiben. Hinzu kommen Gasblasen aus der Inbebtriebsetzungsladung, welche einen Teil des Elektrolytgels aus den Plattenporen verdrängen, so daß ganze Bereiche der aktiven Plattenoberfläche von einer isolierenden Gasschicht abgedeckt werden. Damit entfällt auch ein sonst von den aufsteigenden Gasblasen ausgehender Rühreffekt, welcher bei konventionellen Bleiakkumulatoren der Säureschichtung in willkommener Weise entgegenwirkt.

Da ja der wartungsfreie Blei-Säure-Akkumulator im Sauerstoffzyklus arbeitet, wird oft angenommen, daß der Sauerstofftransport von der positiven zur negativen Elektrode im Idealfall über mikroskopisch feine Spalte und Risse in der trennenden Gelschicht erfolgt. Die Praxis konnte dies nur zum Teil bestätigen; sie lehrte andererseits die Gefahr, daß die am Entweichen gehinderten Gasblasen durch das Gel hindurch Brücken schlagen können, durch die sich der Sauerstoff einen direkten Zutritt zur negativen Elektrode auf kürzestem Weg verschafft (Gaskurzschluß), wo er sich mit dem aktiven Blei unter starker lokaler Erwärmung (sogenannte hot spots) chemisch umsetzt. Natürlich fallen auch diese Elektrodenbereiche für die Stromlieferung aus. Die Plattengitter erfahren eine verstärkte Korrosion und die Batterielebensdauer ist verkürzt.

Ein anderes Problem bei Akkumulatoren mit Gel-Elektrolyt ist schließlich die Abscheidung von freier Flüssigkeit bereits beim ersten Aufladen, eine der Synaerese vergleichbare Erscheinung, hier jedoch nicht durch Alterung des Gels verursacht, sondern ausgelöst durch den Druck der Ladegase, welcher die Säure aus dem Gel herausquetscht. Man ist dann bei der Inbetriebsetzung zum Absaugen der Flüssigkeit, also einem zusätzlichen Arbeitsgang, gezwungen, weil sonst die Kippsicherheit nicht mehr gewährleistet ist, was in seiner Konsequenz die Inkaufnahme höherer Fertigungskosten und eines weiteren, bleibenden Kapazitätsverlustes bedeutet.

Alle diese Funktionsmängel konnten bisher mit keinem der handelsüblichen Separatoren abgestellt werden.

Der Erfindung liegt die Aufgabe zugrunde, einen Bleiakkumulator nach dem eingangs formulierten Gattungsbegriff anzugeben, dessen Separation den besonderen Bedingungen des Betriebes mit einem gelartig verdickten Säureelektrolyten besser angepaßt ist und ebenso wirtschaftlich wie handelsübliche Separatoren gefertigt werden kann.

Diese Aufgabe wird gemäß der Erfindung gelöst durch einen Bleiakkumulator, der einen Separator mit den im kennzeichnenden Teil des Ansruchs 1 angegebenen Merkmalen enthält.

Mit der Maßgabe, daß die Rippen eine parallel zum Grundblatt gemessene Breite besitzen, die mindestens doppelt so groß sein soll wie die Abstandsbreite zwischen ihnen, also Breite der sie trennenden kanalförmigen Vertiefungen, unterscheidet sich der Separator gemäß Anmeldung von herkömmlichen doppelseitig gerippten Batteriescheidern im wesentlichen dadurch, daß die Zwischenräume zwischen den Rippen, die sonst ausgedehnte Freiräume für einen Flüssiggelelektrolyten ergeben, nunmehr vergleichsweise nur noch schmale Einschnitte in den Außenschichten des Separators darstellen.

Vorzugsweise ist die Breite der Rippen 5 bis 10 mal größer als die Kanalbreite, während die Gesamtdicke des erfindungsgemäßen Separators im gleichen Rahmen wie bei bekannten Separatoren liegt. Als besonders zweckmäßig haben sich eine Rippenbreite von ca. 15mm und eine Breite der Kanäle von ca. 2mm bei einer Plattengröße von ca. 200x200mm erwiesen. Die Tiefe der Zwischenräume oder Einschnitte ist nicht kritisch, soweit die Bruchfestigkeit und Handhabbarkeit des Separators bei der Montage nicht infrage gestellt wird. Jedoch sollte eine Einschnitttiefe von 1/3 der Gesamtdicke des Separators nicht überschritten werden.

Im Einbauzustand sollen die Rippen in der stehenden Zelle vertikal verlaufen. Dabei können die Rippen Rücken an Rücken liegen oder auch gegeneinander versetzt angeordnet sein. Im letzteren Fall ist wegen der Überlappung der Einschnitte auf einer Seite des Separators durch die Rippen der anderen Seite eine größere Biegefestigkeit gegeben.

Der erfindungsgemäße Separator mit der ihn grundsätzlich auszeichnenden Querschnittsgeometrie kann als einstückiges Diaphragma aus einem einheitlichen Material gebildet sein. Dabei ist die Porosität dieses Materials und damit auch das elektrische Widerstandsverhalten durch an sich bekannte Maßnahmen, z.B. Zumischen eines Fillers zur gepulverten Separator-Grundsubstanz und Auslaugen nach einem Sinterprozeß, beliebig einstellbar.

Vorteilhafterweise jedoch werden die Rippen gesondert auf ein SeparatorGrundblatt aufgeklebt, aufgeschweißt, aufgepreßt, mit dem Grundblatt mechanisch verfilzt oder durch gewaltsames Einsetzen mit diesem fest verbunden. Das Separator-Grundblatt besteht hierbei aus einem mikroporösen ersten Material, z.B. auf der Basis Polyester, Zellulose, Polyethylen oder Polyvinylchlorid (PVC). Eine Sinterfolie aus PVC ist besonders geeignet. Die Porengröße eines solchen Materials sollte kleiner sein als 10µ, um Durchwachsungen oder das Durchdringen lockerer Massepartikel sicher zu verhindern.

Den Rippen liegt ein zweites Material mit einer Porengröße von vorzugsweise mehr als 10µ zugrunde, das demnach makroporös ist und erfindungsgemäß aus Glasfaservlies oder säurebeständigem Kunststoffaservlies besteht. Sie können aus handelsüblichen Fasermatten, die auch als Bandware lieferbar sind, leicht in Streifenform zugeschnitten werden.

Besonders vorteilhaft ist ein Zuschnitt der Streifen in der Form eines Rostes oder Kamms, der jeder Seite des Grundblattes einfach aufgelegt wird und höchstens zur Montage einer leichten Fixierung bedarf.

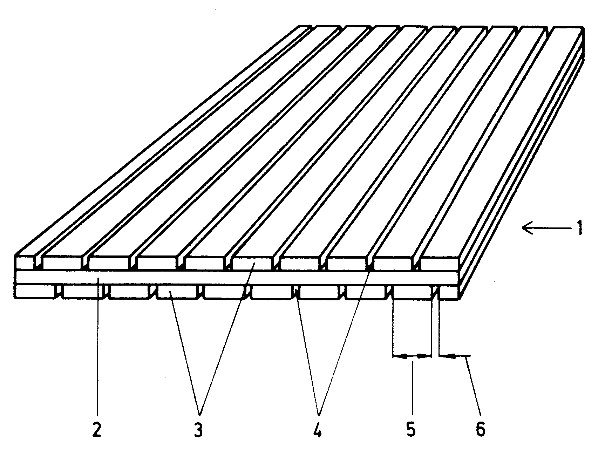

Die Figur verdeutlicht die Struktur eines Separators 1 gemäß der Erfindung in einer vorzugsweisen Ausführung mit gegeneinander versetzten Rippen 3.Der Separator 1 besteht aus einem Separator-Grundblatt 2, auf welchem beidseitig Rippen 3 angeordnet sind, zwischen denen sich Kanäle 4 befinden. Die Breite der Rippen 3 ist mit 5 und die Breite der Kanäle 4 ist mit 6 bezeichnet.

Der erfindungsgemäße Separator besitzt eine Vielzahl von Vorteilen.

Durch die Kanäle ist die das Säuregel bindende Schicht der Rippen so unterbrochen, daß in den Rippen verfangene Gasblasen über kurze seitliche Weglängen leicht zu diesen hin und nach oben entweichen können, weil das Gel in diesen Zwischenräumen nicht in einem Faserfilz verankert ist und bereits einem leichten Druck der entstehenden Gasblasen ausweicht. Die Kanäle erhalten somit die Funktion von Sollbruchstellen für das entweichende Gas und stellen vertikale Gaskanäle dar. Dies hat zur Folge, daß nur noch äußerst geringe Mengen an Synaereseflüssigkeit entstehen, die nicht mehr abgesaugt zu werden brauchen.

Zugleich mit der leichteren Gasfreisetzung wird auch ein besserer Füllgrad des Plattensatzes und damit eine bessere Kapazität erreicht.

Das erleichterte Entweichen von Gasblasen aus dem Elektrodenpaket gibt keinen Anlaß mehr für das Entstehen der erwähnten hot spots.

Das schon beim Einfüllen durch Kontakt der karbonathaltigen Platten mit der Säure entbundene CO₂ kann insbesondere auch über die der negativen Elektrode zugekehrten Kanäle entweichen und die Gallerte aus diesen verdrängen. Damit ist dem an der positiven Elektrode entwickelten und in den Kanälen auf ihrer Seite aufsteigenden Sauerstoff ein leichterer Zugang zur negativen Elektrode, nämlich über die obere Kante des Separators hinweg und in dessen rückseitige Kanäle hinein, eröffnet. Die Kanäle haben zugleich eine Verteilerfunktion und tragen zu einer gleichmäßigen Verteilung der bei der Verzehrreaktion entstehenden Oxidationswärme bei.

Schließlich ist es für die einwandfreie gasdichte Batteriefunktion von Vorteil, daß der erfindungsgemäße Separator mittels der breiten Vliesrippen großflächig und mit innigem Kontakt zur Anlage an die Elektrodenplatten gelangt, weil es für die elektrochemischen Vorgänge wichtig ist, die Oberflächen der Elektrodenplatten in ihrer Gesamtheit ausreichend mit Elektrolyt zu versorgen.

## Patentansprüche

1. Bleiakkumulator mit einem gelartig festgelegten Schwefelsäure-Elektrolyten und einer benachbarte Elektrodenplatten entgegengesetzter Polarität auf Abstand haltenden Separation, dadurch gekennzeichnet, daß die Separation von einem porösen Separator-Grundblatt (2) gebildet ist, welches auf beiden Seiten makroporöse Rippen (3) mit einer Porengröße von mehr als 10µ aufweist, zwischen welchen im wesentlichen parallel verlaufende Kanäle (4) liegen und daß die Breite (5) der Rippen (3), gemessen parallel zum Grundblatt, mindestens doppelt so groß ist wie die Breite (6) der Kanäle (4).

2. Bleiakkumulator nach Anspruch 1, dadurch gekennzeichnet, daß die Breite der Rippen das Fünf- bis Zehnfache der Breite der Kanäle beträgt.

3. Bleiakkumulator nach einem der Ansprüche 1 und 2, dadurch gekennzeichnet, daß die Rippen Rücken an Rücken angeordnet sind.

4. Bleiakkumulator nach einem der Ansprüche 1 oder 2, dadurch gekennzeichnet, daß die Rippen auf gegenüberliegenden Seiten des Grundblattes (2) gegeneinander versetzt angeordnet sind.

5. Bleiakkumulator nach einem der Ansprüche 1 bis 4, dadurch gekennzeichnet, daß das Separator-Grundblatt und die Rippen als ein einstückiges Diaphragma aus einem einheitlichen Material ausgebildet sind.

6. Bleiakkumulator nach einem der Ansprüche 1 bis 4, dadurch gekennzeichnet, daß das Separator-Grundblatt (2) aus einem mikroporösen, ersten Material besteht, mit welchem die Rippen aus einem makroporösen, zweiten Material durch Kleben, Schweißen, Pressen oder mechanisches Verfilzen fest verbunden sind.

7. Bleiakkumulator nach einem der Ansprüche 1 bis 4, dadurch gekennzeichnet, daß das Separator-Grundblatt (2) aus einem mikroporösen ersten Material besteht und daß die Rippen von einem Kamm oder Rost aus einem makroporösen zweiten Material gebildet sind, der jeder Seite des Separator-Grundblattes aufgelegt ist.

8. Bleiakkumulator nach einem der Ansprüche 1 bis 7, dadurch gekennzeichnet, daß das mikroporöse Material gesintertes Polyvinylchlorid ist.

9. Bleiakkumulator nach einem der Ansprüche 1 bis 7, dadurch gekennzeichnet, daß das makroporöse Material ein Glasfaservlies oder ein säurebeständiges Kunststoffaservlies ist.

## Claims

1. Lead accumulator, having a sulphuric acid electrolyte set in the manner of a gel and a separation means holding adjacent electrode plates of opposite polarity at a spacing, characterized in that the separation means is formed by a porous separator base sheet (2) which has on both sides macroporous ribs (3) having a pore size of more than 10 µm, between which ribs (3) there are located substantially parallel channels (4), and in that the width (5) of the ribs (3), measured parallel to the base sheet, is at least double the width (6) of the channels (4).

2. Lead accumulator according to Claim 1, characterized in that the width of the ribs is five to ten times the width of the channels.

3. Lead accumulator according to one of Claims 1 and 2, characterized in that the ribs are arranged back to back.

4. Lead accumulator according to one of Claims 1 or 2, characterized in that the ribs are arranged offset with respect to one another on opposite sides of the base sheet (2).

5. Lead accumulator according to one of Claims 1 to 4, characterized in that the separator base sheet and the ribs are constructed as a one-piece diaphragm of a single material.

6. Lead accumulator according to one of Claims 1 to 4, characterized in that the separator base sheet (2) is of a microporous first material to which the ribs of a macroporous second material are fixedly connected by adhesion, welding, pressing or mechanical felting.

7. Lead accumulator according to one of Claims 1 to 4, characterized in that the separator base sheet (2) is of a microporous first material, and in that the ribs are formed by a comb or grid of a macroporous second material which is laid on each side of the separator base sheet.

8. Lead accumulator according to one of Claims 1 to 7, characterized in that the microporous material is sintered polyvinyl chloride.

9. Lead accumulator according to one of Claims 1 to 7, characterized in that the macroporous material is a glass fibre fleece or an acid-resistant plastics fibre fleece.

## Revendications

1. Accumulateur au plomb comprenant comme électrolyte un gel immobilisé à base d'acide sulfurique et une séparation maintenant à distance des plaques voisines d'électrode de polarités opposées, caractérisé en ce que la séparation est formée d'une feuille de base poreuse (2) de séparateur qui présente, sur ses deux faces, des nervures microporeuses (3) d'une taille des pores de plus de 10 µm, entre lesquelles il y a des canaux (4) qui sont essentiellement parallèles et en ce que la largeur (5) des nervures (3), en mesurant parallèlement à la feuille de base, est égale au moins au double de la largeur (6) des canaux (4).

2. Accumulateur au plomb selon la revendication 1, caractérisé en ce que la largeur des nervures représente cinq à dix fois la largeur des canaux.

3. Accumulateur au plomb selon l'une quelconque des revendications 1 et 2, caractérisé en ce que les nervures sont agencées dos à dos.

4. Accumulateur au plomb selon l'une quelconque des revendications 1 ou 2 , caractérisé en ce que les nervures sont agencées en étant mutuellement décalées sur des faces opposées de la Feuille de base (2).

5. Accumulateur au plomb selon l'une quelconque des revendications 1 à 4, caractérisé en ce que la feuille de base du séparateur et les nervures sont configurées en une membrane en une pièce en un matériau unitaire.

6. Accumulateur au plomb selon l'une quelconque des revendications 1 à 4, caractérisé en ce que la feuille de base (2) du séparateur se compose d'un premier matériau microporeux avec lequel les nervures en un second matériau macroporeux sont solidement reliées par collage, soudage, en pressant ou bien en les formant mécaniquement.

7. Accumulateur au plomb selon l'une quelconque des revendications 1 à 4, caractérisé en ce que la feuille de base (2) du séparateur se compose d'un premier matériau microporeux et en ce que les nervures sont formées à partir d'un peigne ou d'une grille en un second matériau macroporeux qui est placé de chaque côté de la feuille de base du séparateur.

8. Accumulateur au plomb selon l'une quelconque des revendications 1 à 7, caractérisé en ce que le matériau microporeux est du chlorure de polyvinyle fritté.

9. Accumulateur au plomb selon l'une quelconque des revendications 1 à 7, caractérisé en ce que le matériau macroporeux est un non-tissé de fibres de verre ou bien un non-tissé de matière synthétique résistant aux acides.
